# EUROPEAN PATENT SPECIFICATION

(11) **EP 0 282 345 B1**
(45) Date of publication and mention of the grant of the patent: **09.06.1993**
(21) Application number: 88302176.8
(22) Date of filing: 11.03.1988
(51) Int. Cl.: A23F 5/16, A23F 5/02

(54) **Process for improving the flavour of robusta coffee sorts**
Verfahren zum Verbessern des Aromas von Robusta-Kaffeesorten
Procédé d'amélioration de l'arôme de café d'espèces Robusta

(30) Priority: 13.03.1987 HU 111287
(43) Date of publication of application: 14.09.1988
(73) Proprietor: SARA Lee/DE N.V., NL-3500 CA Utrecht (NL)
(72) Inventor: Varsányi, Márta, H-1222 Budapest (HU); Krajczár, Pál, H-2233 Ecser (HU); Runtág, Tivadar, H-1112 Budapest (HU); Dörnyei, József, H-1157 Budapest (HU)
(74) Representative: Smulders, Theodorus A.H.J., Ir.

(56) References cited:
- BE-A- 547 640
- DE-A- 2 030 376
- DE-C- 576 515
- FR-A- 508 906
- US-A- 1 972 184

## Description

The invention relates to a process for the pretreatment of green coffee beans of Robusta type for removing the inconvenient off-taste and odour of the above coffee beans as well as for refining its irritating (scratching) and bitter taste.

Arabica and Robusta coffees represent two significantly different types of the commercially available coffee. The Arabica types can be roasted easily and uniformly and give a drink with a pleasant flavour. Robusta coffees have a scratching and bitter taste and often they take up off-tastes and odours arising from an improper pretreatment, careless storage and transportation; therefore they are much cheaper but at the same time their utility in coffee blends is very limited.

A number of processes have been developed for the pretreatment and roasting of green coffee beans of lower quality in order to increase the soluble extract content as well as to diminish and eliminate the off-taste.

Hale and coworkers described in USP. No. 2,712,501 that green coffee beans were treated in a single step by saturated steam at 170 to 224 °C, under a pressure of 0.69 to 2.41 MPa for 2 to 15 minutes. The pressure was diminished to the atmospheric pressure during a period lasting from 30 seconds to 5 minutes. The aim of this process is to prepare a coffee extract after roasting. The pH value of the extract is adjusted by a solution containing a basic compound which indicates that the treatment results in a product which is acidic in nature.

In USP. No. 3,088,825 a wet coffee roasting process carried out under pressure is described by Topolian et al. The treatment comprises two steps: preheating (at 116 to 199 °C under atmospheric pressure with a dwelling period of 1 to 3 minutes) and roasting (at 188 to 288 °C, under a pressure of 1.31 to 7.09 MPa for 0.3-4 minutes). At the end of the roasting, the coffee is suddenly released into an expansion zone with simultaneous cooling. The product obtained has a soluble extract content that is 10 to 15% higher (30 to 40% by weight) than those obtained by the traditional roasting method.

A method of steam treatment as well as roasting and blending of Robusta coffee are described by Spothols in USP. No. 3,106,470. The aim of this process is similarly to increase the soluble dry substance content of the coffee extract. This process involves three stages: preheating, roasting and after-heating. During the preheating the temperature of the green coffee beans is elevated under atmospheric pressure to a temperature of 116 to 199 °C by air heated to 193 to 210 °C (this amounts to one-fourth to one-third part of the whole treatment period).

In the course of the wet roasting, the temperature of the coffee is increased to 188 to 288 °C by steam having a temperature of 188 to 316 °C and a pressure of 1.40 to 1.72 MPa. The roasting time is 4 to 9 minutes, i.e. one-fourth part of the whole treatment period. At the end of the roasting, the coffee is suddenly released into an expansion zone with simultaneous cooling, then is introduced to an after-heating zone where a hot gas is passed through it under atmospheric pressure while maintaining the temperature between 204 °C and 316 °C for decreasing the acidity of the coffee beans. The thus obtained roasted coffee contains 30 to 40% by mass of soluble dry substance which is 10 to 15% higher than that of the traditionally roasted coffee.

In USP. No. 3,640,726 a process for the preparation of a Robusta-containing coffee blend with a higher quality is published by Bolt et al.. According to this specification, Robusta coffee is roasted in two steps: first, the green coffee beans containing 8 to 14% by mass of water are introduced into a roasting zone for steam treatment, wherefrom the air is practically completely removed (down to a pressure of 0.40 to 0.80 kPa). The coffee containing 20 to 32% by mass of water is heated to 180 to 190 °C by saturated steam under 0.24 to 1.10 MPa, the above pressure and temperature are maintained for 2.5 to 6 minutes whereby the coffee is partly roasted. While introducing the steam the coffee is kept under reduced pressure for 5 minutes until the residual air is expelled and replaced by the steam. Thereafter, the pressure is rapidly released to stop roasting. The temperature of the coffee beans rapidly decreases to about 66 to 100 °C. Before the after-roasting, the coffee is stored for a period lasting at most 2 hours. The after-roasting is carried out by hot air for 7.5 to 30 minutes at 163 to 260 °C down to a water content of 2 to 5%. 40 to 90% of the colour change proceeds during the pre-roasting by the steam treatment. Arabica coffee or an Arabica Robusta blend are separately roasted in the traditional manner and the blend prepared as a final product contained more than 20% by mass of Robusta.

Dar et al. described a method for the steam treatment, roasting and blending of Robusta coffee in USP. No. 4,540,591. According to this method Robusta coffee is treated at 166 to 180 °C under a pressure of 0.71 to 1.01 MPa in a cylindrical vessel under continuous ventilation for 10 to 15 minutes. Before roasting, the coffee is dried by air having a temperature of 38 to 120 °C at most for 2 hours. More types of roasting processes are used. Blends containing 15 to 30% by mass of roasted Robusta were prepared which blends contained at least one sort of roasted Arabica coffee and the extracts obtained had a dry substance nearly identical with that of the traditionally roasted coffee.

A drawback of the processes described above consists in that as a consquence of the high pressures used acidic-taste decomposition products, e.g. furfurol, various glycosides and the like are formed which have no influence on the pH but are quite different from the flavour substances of the coffee and influence its characteristic taste. The flavour substance of the coffee is also diluted by the thus formed decomposition products. The inconvenient off-tastes and odour of the Robusta coffee are decreased but its flavour is not improved by the above treatments whereby the utility of the thus treated coffees in coffee blends remains limited.

FR 508 906 describes a process for removing purines from coffee by treating the beans to steam optionally containing acetic acid. However the essential operating conditions required by the following claims are not disclosed. DE 576 515 describes a process for improving the flavour of coffee by steam treatment for 1 to 3 hours, optionally in the presence of a mineral acid.

The invention is based on the recognition that the taste character of Robusta coffee types is improved by using an acidic steam treatment. The theoretical basis of this recognition lies in the difference in the chemical composition of the Robusta and Arabica coffee types, more precisely the most characteristic difference appears in that an important divergence exists concerning the pH value of the extracts of the two types of coffee which decisively influences the taste and flavour of the coffee drink: the pH value of the drink decocted from Arabica-type coffee is about 5.2 whilst that of the Robusta-type is about 5.8. Thereby, the difference in their taste character can in great part be explained (Sivetz: Coffee Processing Technology, AVI. Publishing Company, Inc. 1963. Vol. II. pp. 78-81).

This difference in the pH value is diminished by the treatment according to the invention, as defined in the accompanying claims.

To the above acidic steam treatment an organic acid is added that is volatile under the given treatment conditions and that occurs naturally in green coffee beans or in the roasted coffee.

Among the organic acids present in coffee, there can be mentioned, for example, acetic acid, propionic acid, valeric acid and butyric acid as well as chlorogenic acid, caffeic acid, quinic acid, citric acid, malic acid, tartaric acid, oxalic acid and pyruvic acid which are found in the green coffee beans and in the roasted coffee, respectively.

Based on those mentioned above, it has been found that by carrying out the pretreatment of the green Robusta coffee beans by saturated steam under lower pressures and introducing to the system one or more organic acid(s) which is (are) present among the flavour substances of the coffee and is (are) volatile under the reaction conditions used, a coffee drink can be prepared having a more refined taste and more approaching the character of the drinks decocted from the Arabica coffee types.

The pretreatment of the Robusta coffee is carried out under a pressure of 0.1 to 0.6 MPa, in a temperature range between 100 °C and 155 °C, preferably under a pressure of 0.2 to 0.5 MPa and at 120 to 152 °C, more preferably under a pressure of 0.35 MPa and at 135 °C for 1 to 15 minutes. In the system a 0.5 to 8 o/oo concentration of the organic acids is maintained, optionally under continuous steam flow. (As used herein, the term "o/oo" means parts per thousand.)
In comparison to the processes of the prior art, the advantages of the process of the invention are as follows:
- after the pretreatment any of the traditional roasting processes may be used;
- the roastability of the coffee up to an optimum quality (e.g. concerning colour, taste and flavour) is facilitated by the pretreatment according to the invention;
- the flavour of the product obtained by using the process is improved to such an extent that the product can be used without any limitation in coffee blends and without deteriorating the taste.

The process of the invention is illustrated in detail by the following non-limiting Examples.

### Example 1

100 g of Robusta green coffee beans were pretreated at 112 °C under a pressure of 0.16 MPa for 15 minutes in a pressure-resistant equipment where the removal of a part of the steam during the pretreatment period was ensured by the appropriate adjustment of a safety valve.

The saturated steam phase contained 1 o/oo by volume of acetic acid. After the pretreatment, the coffee was roasted in a gas-operated PROBAT type laboratory roasting equipment. The thus pretreated coffee was easier to roast, the green coffee beans lost their off-tastes and undesired odour and their taste became more refined.

### Example 2

200 g of Robusta green beans were pretreated by saturated steam containing 1 o/oo of acetic acid at 130 °C under 0.3 MPa pressure for 5 minutes and after roasting in a gas-operated PROBAT type laboratory roaster, a coffee with good flavour was obtained. The soluble extract content of the coffee drink decocted from the coffee treated according to this Example amounted to higher than 30% by mass.

### Example 3

200 g of Robusta green coffee beans were pretreated by saturated steam containing 0.5 o/oo of acetic acid at 135°C under 0.35 MPa for 5 minutes and then roasted as described above to give a coffee drink with perfect flavour and with a soluble extract more than 30% by mass.

## Claims

1. A process for the pretreatment of Robusta green coffee beans by saturated steam under pressure in a vapour space, which comprises introducing to the space 0.5 to 8 o/oo of one or more organic acid(s) which are present among the flavour substances of green coffee beans or of roasted coffee and are volatile under the given treatment conditions, adjusting the pressure to between 0.1 MPa and 0.6 MPa and the temperature to between 100°C and 155°C, carrying out the pretreatment for 1 to 15 minutes, and optionally releasing part of the steam from the vapour space.

2. A process as claimed in claim 1 which comprises using acetic acid as the or one of the organic acids.

## Patentansprüche

1. Verfahren zum Vorbehandeln von grünen Robusta-Kaffeebohnen mit gesättigtem Dampf unter Druck in einem Dampfraum, bei welchem Verfahren 0,5 bis 8 o/oo einer oder mehrerer organischer Säuren, die unter den Aromastoffen grüner Kaffeebohnen oder gerösteten Kaffees anwesend sind und die unter den gegebenen Behandlungsbedingungen flüchtig sind, in den Raum eingeführt werden, der Druck auf 0,1 MPa bis 0,6 MPa, und die Temperatur auf 100 °C bis 155 °C eingestellt werden, die Vorbehandlung während 1 bis 15 Minuten durchgeführt wird und wahlweise ein Teil des Dampfes aus dem Dampfraum herausgelassen wird.

2. Verfahren nach Anspruch 1, wobei Essigsäure als die organische Säure oder eine der organischen Säuren verwendet wird.

## Revendications

1. Procédé pour le traitement préalable de grains de café verts du type Robusta avec de la vapeur saturée, sous pression, dans un espace vapeur, qui comprend les opérations consistant à introduire dans cet espace 0,5 à 8 ‰ d'un ou plusieurs acides organiques qui sont présents dans les substances aromatiques des grains de café verts ou du café torréfié et sont volatils dans les conditions de traitement définies, régler la pression entre 0,1 MPa et 0,6 MPa et la température entre 100°C et 155°C, effectuer le traitement préalable pendant 1 à 15 minutes, et relâcher éventuellement une partie de la vapeur de l'espace vapeur.

2. Procédé selon la revendication 1, comprenant l'utilisation de l'acide acétique comme seul acide organique ou comme l'un des acides organiques.
